# EUROPÄISCHE PATENTSCHRIFT

(11) **EP 0 901 683 B1**
(45) Veröffentlichungstag und Bekanntmachung des Hinweises auf die Patenterteilung: **21.11.2001**
(21) Anmeldenummer: 97927052.7
(22) Anmeldetag: 27.05.1997
(51) Int. Cl.: H01F 7/18, H02M 3/155

(54) **SCHALTREGLER FÜR EINEN ELEKTROMAGNETEN**
SWITCHED-MODE REGULATOR FOR AN ELECTROMAGNET
REGULATEUR A DECOUPAGE POUR UN ELECTRO-AIMANT

(30) Priorität: 29.05.1996 DE 19621486
(43) Veröffentlichungstag der Anmeldung: 17.03.1999
(73) Patentinhaber: ultrafilter international AG, 42781 Haan (DE)
(72) Erfinder: KELLENDONK, Peter, D-50933 Köln (DE); SCHUSTER, Hans-Michael, D-42781 Haan (DE)
(74) Vertreter: König, Reimar .
(86) Internationale Anmeldenummer: EP9702739
(87) Internationale Veröffentlichungsnummer: WO9745846

(56) Entgegenhaltungen:
- FR-A- 2 538 942
- GB-A- 2 103 436
- PATENT ABSTRACTS OF JAPAN vol. 011, no. 338 (E-553), 5.November 1987 & JP 62 120006 A (RICOH CO LTD), 1.Juni 1987,

## Beschreibung

### Technisches Gebiet

Die Erfindung betrifft einen Schaltregler mit Speicherdrossel, Tastschalter, einem eine Magnetspule aufweisenden Elektromagneten und einer Regelelektronik zum Betrieb des Elektromagneten mit vorgegebener Betriebsspannung bei unterschiedlichen Versorgungsspannungen, dessen Betriebsspannung in einein Speicherkreis, dem ein auf eine dem Tastschalter zugeordnete Regelelektronik geschalteter Meßwertsensor zugeordnet ist, mit einer an der Versorgungsspannung liegenden Speicherdrossel erzeugt wird.

### Stand der Technik

Der Begriff "Elektromagnet" steht zugleich für jedes mit einem solchen Magneten vergleichbares Bauteil mit einer Magnetspule; hierzu zählen beispielsweise Magnetventile, Schütze, elektromechanische Regelungen, beispielsweise Aufzugtüren und elektromagnetische Stellglieder. Schaltregler dienen beispielsweise zum Steuern elektronischer Kondensatableiter. Im Prinzip handelt es sich bei einem Kondensatableiter um ein Gerät, das den Pegel eines in einem Behälter gesammelten Kondensats erfaßt und beim Überschreiten eines vorgegebenen Pegelstands den Behälter durch Betätigen eines Magnetventils entleert. Das Magnetventil wird durch Aktivieren eines Elektromagneten geöffnet bzw. geschlossen.

In der Praxis ist es bekannt, einen Elektromagneten zur Anpassung an unterschiedliche Versorgungsspannungen über einen Transformator zu versorgen. Wenn in einem Anwendungsfall, z.B. bei einem Kondensatableiter, eine zusätzliche Meß- oder Steuerelektronik erforderlich ist, läßt sich diese Elektronik ebenso über den Transformator mit Spannung versorgen.

Als Alternative zum Transformator dienen Schaltregler bzw. Schaltspannungsregler. Durch Regelung des Tastverhältnisses - Verhältnis von Impuls-zu-Periodendauer, also zum Abstand der Impulse - des Ausgangsstroms als Funktion der jeweiligen Regelgrößen bleibt die Ausgangs-bzw. Betriebsspannung praktisch konstant. Wesentlich ist dafür die Speicherdrossel, deren Energiemenge mit Hilfe des Tastschalters in etwa konstant gehalten wird. Hierzu wird mit Hilfe eines Meßwertsensors die momentan in der Speicherdrossel enthaltene Energiemenge erfaßt. Der Meßwertsensor gibt seine Signale an eine Regelelektronik weiter, die wiederum den Tastschalter im Sinne der Konstanz der in der Speicherdrossel enthaltenen Energiemenge steuert.

Dieser Stand der Technik ist aus dem Fachbuch "Halbleiterschaltungstechnik" von U. Tietze/Ch. Schenk, 9. Auflage, Seiten 564-566 bakannt.

Die beschriebene Technik führt bei Verwendung des Transformators zu Logistikproblemen, da jeder Spannungsbereich eine eigene Gerätevariante erfordert; außerdem ist der Aufwand an Kosten und Platz sowohl für den Transformator als auch für den Schaltregler mit Speicherdrossel erheblich.

### Darstellung der Erfindung

Der Erfindung liegt das Problem zugrunde, eine Schaltung, insbesondere für einen Kondensatableiter, zu schaffen, die einen kosten- und platzsparenden Betrieb eines Elektromagneten an verschiedenen Versorgungsspannungen erlaubt und es zugleich ermöglicht, die Versorgungsspannung für eine Steuerelektronik zu erzeugen.

Hierzu besteht die erfindungsgemäße Lösung bei dem eingangs beschriebenen Schaltregler darin, daß die SpeiCherdrossel zugleich als Magnetspule des Elektromagneten dient.

Bei dieser Lösung besteht ein wesentliches Merkmal der Erfindung in der Doppelfunktion der einen Spule, nämlich in der Verwendung der Magnetspule des Elektromagneten zugleich als Speicherdrossel eines dem Elektromagneten zugeordneten Schaltreglers. Die Spule erfüllt demgemäß - speziell bei eingeschaltetem Elektromagnet - die beiden Funktionen gleichzeitig. So wird die Magnetspule des Elektromagneten, die eigentlich nur mit Spannung versorgt werden soll, erfindungsgemäß momentan zugleich als Steuermittel zum Erzeugen einer vorgegebenen Betriebsspannung aus Versorgungsspannungen unterschiedlicher Größe benutzt, also letztlich zum Erzeugen einer separaten Spannung vorgegebener Größe gebraucht.

Wenn der Betrieb des Schaltreglers beim Erzeugen einer vorgegebenen Betriebsspannung eine gegenüber dem Bedarf eines Elektromagneten relativ kleine Leistung aufnimmt, kann es vorteilhaft sein, beim Betrieb der Speicherdrossel als Magnetspule des Elektromagneten mindestens einen Zusatzwiderstand an die Betriebsspannung zu legen. Dieser kann über die Speicherdrossel versorgt werden und in Reihe mit der Drossel sowie gegebenenfalls parallel zu einem auf die Betriebsspannung geschalteten Verbraucher liegen. Die Größe dieses Zusatzwiderstandes soll im Prinzip umgekehrt proportional zum Leistungsbedarf des Elektromagneten sein. Mit anderen Worten kann man sagen, daß der Zusatzwiderstand eingeschaltet wird, um die Energiemenge in der Speicherdrossel so zu erhöhen, daß der Elektromagnet mit der gewünschten Kraft anzieht.

Da der Zusatzwiderstand in der Regel nur dann eingeschaltet wird, wenn die Speicherdrossel als Magnetspule des Elektromagneten arbeiten soll, liegt in Reihe mit dem Zusatzwiderstand zweckmäßig ein Schalter, der in Abhängigkeit vom Leistungsbedarf des Verbrauchers gesteuert werden kann, beispielsweise durch die ohnehin zum Betätigen des Tastschalters erforderliche Regelelektronik. Hiernach ist die Steuerung eines Elektromagneten, dessen Magnetspule alternativ als Speicherdrossel dient, problemlos möglich.

Die erfindungsgemäße Schaltung besitzt besonders im Bereich der Haltestrombegrenzung des Elektromagneten große Vorteile, wenn nämlich ein variabler Zusatzwiderstand oder mindestens zwei Zusatzwiderstände nach dem Schalten bzw. Anziehen des Elektromagneten mindestens teilweise ausgeschaltet werden, so daß der verbleibende durch die als Magnetspule fungierende Speicherdrossel fließende Strom gerade zum Halten des Magneten ausreicht und daher thermische Verluste praktisch nicht auftreten. Dadurch ergeben sich beträchtliche Kostenersparnisse beim Wickeln sowie eine erhebliche Energieersparnis beim Betrieb des Elektromagneten.

Wesentliche durch die Erfindung erzielbare Vorteile sind beim Ersetzen des Transformators durch einen Schaltregler der Wegfall der separaten Speicherdrossel und zugleich die Möglichkeit, durch die bei, z.B. in Kondensatableitern eingesetzten, Magnetventilen höhere Induktivität der (als Speicherdrossel verwendeten) Magnetspule, den üblichen Bauteilaufwand des Schaltreglers zu verringern. Im Vergleich zur Verwendung eines Standard-Schaltreglers ergibt sich aufgrund des Wegfalls einer separaten Speicherdrossel und der einfacheren Bauteile der Steuerungselektronik ebenso ein erheblicher Raum- und Kostenvorteil. Schließlich können nur noch ein einziges Magnetventil und eine Steuerelektronik für den Einsatz an allen Versorgungsnetzen erforderlich sein. Daraus resultiert eine enorme Vereinfachung der Logistik.

Bei herkömmlichen Schaltreglern liegt die Regelelektronik an der von Fall zu Fall unterschiedlichen Versorgungsspannung. Daher sind entsprechende Schutzmaßnahmen und/oder Spannungsregler erforderlich. Die Erfindung kann diesen Aufwand vermindern, wenn die Regelelektronik über die Speicherdrossel versorgt wird bzw. an der konstant geregelten Betriebsspannung liegt. Gegebenenfalls liegt die Regelelektronik nicht an der definitionsgemäß von Fall zu Fall verschiedenen Versorgungsspannung, sondern an derjenigen Spannung, die durch die Regelelektronik selbst - durch Steuerung des Tastschalters - (fast) konstant geregelt wird.

Hiernach ist es vorteilhaft, wenn dem Speicherkreis der Speicherdrossel nicht nur ein die in der Speicherdrossel enthaltene Energiemenge erfassender Meßwertsensor, sondern auch die zugehörige Regelelektronik zum Steuern des Tastschalters unmittelbar zugeordnet ist. Durch diese Zusammenfassung, vorzugsweise Integration, wird die Regelelektronik nur insoweit durch die anliegende Spannung belastet bzw. die Energieversorgung selbst belastet, wie sie momentan zum Betätigen des Tastschalters Arbeit leistet. Die Position der Regelelektronik an der konstanten Betriebsspannung ist besonders dann günstig, wenn außerdem die Speicherdrossel zugleich als Magnetspule geschaltet ist.

Ein wichtiger Anwendungsfall der Erfindung sind elektronische Kondensatableiter bzw. Schaltregler für elektronische Kondensatableiter. Bei einer Versorgung über einen Schaltregler liegt die Meßelektronik des Kondensatableiters an der konstanten Ausgangsspannung bzw. Betriebsspannung, die der Schaltregler liefert. Der Kondensatableiter enthält außerdem eine Magnetspule zum Betätigen eines Magnetventils. Das öffnet, wenn ein Kondensat in einem Behälter, dessen Pegel mit der Meßelektronik erfaßt wird, ein vorgegebenes Niveau überschreitet. Zum Betätigen des Magnetventils dient eine Magnetspule, die bei Versorgung über einen Schaltregler ebenfalls an der konstant geregelten Betriebsspannung liegen kann. In diesem Zusammenhang besteht die erfindungsgemäße Lösung darin, daß nicht nur die Meßelektronik an den Klemmen der konstant geregelten Betriebsspannung liegt, sondern zusätzlich die Speicherdrossel - in ihrer erfindungsgemäßen Doppelfunktion - als Magnetspule des zum Kondensatableiter gehörenden sowie durch die Meßelektronik gesteuerten Magnetventils dient. Eine entsprechende Integration des Magnetventils bzw. dessen Magnetspule in die Schaltung des Schaltreglers ermöglicht die Erfindung, so daß das Magnetventil sowohl die Funktion der Speicherdrossel im Schaltnetzteil des Schaltreglers als auch diejenige der Magnetspule des Magnetventils in der Gesamtsteuerung übernimmt.

### Kurze Beschreibung der Zeichnung

Die Erfindung wird nachfolgend anhand von in der Zeichnung dargestellten Ausführungsbeispielen des näheren erläutert. In der Zeichnung zeigen:

### Wege zur Ausführung der Erfindung

- Fig. 1: einen Schaltregler mit als Speicherdrossel dienender Magnetspule eines Elektromagneten, und
- Fig. 2: einen Schaltregler, dessen eigene Regelelektronik mit an der durch die Speicherdrossel im Speicherkreis erzeugten konstanten Betriebsspannung liegt.

Mit Hilfe der Schaltung wird aus einer von Fall zu Fall verschiedenen Versorgungsspannung U_{V} eine im wesentlichen konstante Betriebsspannung U_{B} erzeugt. Das Herz der Schaltung zum Erzeugen der annähernd konstanten Betriebsspannung U_{B} ist ein Speicherkreis 1, dessen wesentliches Element eine Speicherdrossel 2 ist. Die Speicherdrossel 2 wird bei geschlossenem Tastschalter 3 über einen Widerstand 4 und einen Kondensator 5 - es kann sich in beiden Fällen um vagabundierende Leitfähigkeiten bzw. Kapazitäten handeln - mit der Versorgungsspannung U_{V} beaufschlagt. Im Speicherkreis 1 liegt außerdem ein Gleichrichter 6. Wenn die Speicherdrossel 2 die maximale bzw. die gewünschte Energiemenge aufgenommen hat, öffnet der Tastschalter 3. Der Strom durch die Speicherdrossel 2 fließt dann weiter, bis die in der Speicherdrossel 2 enthaltene Energiemenge unter einen vorgegebenen Wert sinkt, bei dem der Tastschalter 3 wieder schließt.

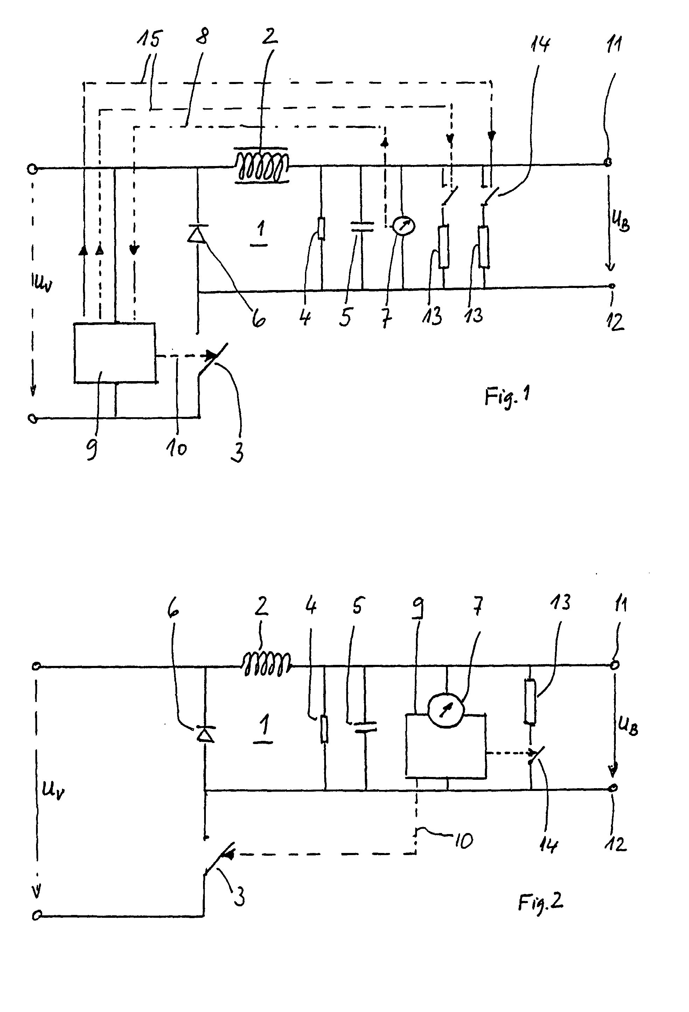

Zum Öffnen und Schließen des Tastschalters 3 in Abhängigkeit von der in der Speicherdrossel 2 enthaltenen Energiemenge gibt es verschiedene mechanische, elektronische oder beispielsweise in Halbleiterbauelementen, integrierte Lösungen. Im Prinzip wird die in der Speicherdrossel 2 enthaltene Energie mit Hilfe eines Meßwertsensors 7 erfaßt. Der Meßwertsensor nach Fig. 1 gibt über eine Leitung 8 ein Signal an eine Regelelektronik 9 - sie liegt nach Fig. 1 an der Versorgungsspannung U_{V} - und die Regelelektronik 8 betätigt den Tastschalter 3 über die Wirklinie 10.

In der bisherigen Praxis kann zwischen die Klemmen 11, 12 der Betriebsspannung U_{B}, ein Elektromagnet, insbesondere eines Kondensatableiters, geschaltet werden. Erfindungsgemäß kann die ohnehin in der Schaltung vorhandene Speicherdrossel 2 alternativ als Magnetspule verwendet werden und ausgebildet sein. Die Speicherdrossel 2 soll also, zumindest für den Fall des Einsatzes als Magnetspule, mit einem Eisenkern ausgestattet werden können.

Wenn die Leistungsaufnahme der Magnetspule des Elektromagneten wesentlich höher als diejenige der Speicherdrossel 2 des Schaltreglers ist, kommt mindestens ein über die Speicherdrossel 2 versorgter bzw. an der Betriebsspannung liegender Zusatzwiderstand 13 mit Schalter 14 hinzu. Der Schalter 14 des jeweiligen Zusatzwiderstandes 13 kann z.B. willkürlich von außen, durch Umschalten der Funktion der Speicherdrossel 2 zum Betrieb als Magnetspule eines Elektromagneten oder durch die Regelelektronik 9, beispielsweise über Leitungen 15, ein- oder ausgeschaltet werden.

Das Einschalten des jeweiligen Elektromagneten kostet bis zum Anziehen des Elektromagneten oft sehr viel mehr Energie, als der spätere Haltebetrieb des Elektromagneten. Es kann daher vorteilhaft sein, zwei oder mehr Zusatzwiderstände 13 mit entsprechenden Schaltern 14 zu verwenden und/oder die Zusatzwiderstände 13 variabel - bevorzugt ebenfalls mit selbsttätiger Steuerung-geschaltet, z.B. über die Regelelektronik 9, auszubilden.

Eine gewisse Alternative zu Fig. 1 ist in der Schaltung nach Fig. 2 dargestellt. In diesem Fall wird die Regelelektronik 9 nicht an die oft unterschiedliche Versorgungsspannung U_{V}, sondern an die von ihr selbst konstant geregelte Betriebsspannung U_{B} gelegt. Beim Ausführungsbeispiel nach Fig. 2 liegt die Regelelektronik 9 in Reihe mit dem Meßwertsensor 7 an der konstanten Betriebsspannung U_{B}. Im übrigen wirkt die Regelelektronik 9 für den Betrieb der Schaltung ganz ähnlich wie im Fall von Fig. 1, so daß die Wirklinien 10,15 in Fig. 2 dieselbe Bedeutung besitzen. Die Bauelemente 2 bis 6 stimmen im Prinzip mit denjenigen der Fig. 1 überein. Auch bei dem Ausführungsbeispiel nach Fig. 2 kann es vorteilhaft sein, die Speicherdrossel 2 zugleich bzw. alternativ als Magnetspule eines an der konstant geregelten Betriebsspannung U_{B} liegenden Elektromagneten auszubilden.

## Patentansprüche

1. Schaltregler mit Speicherdrossel (2), Tastschalter (3), einem eine Magnetspule aufweisenden Elektromagneten und einer Regelelektronik (9) zum Betrieb dieses eine Magnetspule aufweisenden Elektromagneten mit vorgegebener Betriebsspannung (U_{B}) bei unterschiedlichen Versorgungsspannungen (U_{V}), dessen Betriebsspannung in einem Speicherkreis (1), dem die auf eine dem Tastschalter (3) zugeordnete Regelelektronik (9) geschalteter Meßwertsensor (7) zugeordnet ist, mit einer an der Versorgungsspannung liegenden Speicherdrossel (2) erzeugt wird, **dadurch gekennzeichnet, daß** die Speicherdrossel (2) zugleich als Magnetspule des Elektromagneten dient.

2. Schaltregler nach Anspruch 1, **dadurch gekennzeichnet, daß** bei einem Betrieb der Speicherdrossel (2) als Magnetspule mindestens ein Zusatzwiderstand (13) über die Speicherdrossel (2) versorgt wird bzw. an die konstant geregelte Betriebsspannung (U_{B}) gelegt ist.

3. Schaltregler nach Anspruch 2, **gekennzeichnet, durch** Mittel, die den Zusatzwiderstand (13) variabel und selbsttätig den Bedürfnissen von Einschaltstrom und Haltestrom des Elektromagneten anpassen.

4. Schaltregler nach Anspruch 2 oder 3, **dadurch gekennzeichnet, daß** der Zusatzwiderstand (13) durch ein vorzugsweise ebenfalls an der Betriebsspannung (U_{B}) liegendes Gerät, betreffend Zahl oder Größe gesteuert wird.

5. Schaltregler nach einem der Ansprüche 2 bis 4, **dadurch gekennzeichnet, daß** der Zusatzwiderstand (13) über einen Schalter (14) an die Betriebsspannung (U_{B}) gelegt ist.

6. Schaltregler nach Anspruch 5, **dadurch gekennzeichnet, daß** sich der Schalter (14) bei Verwendung der Speicherdrossel (2) als Magnetspule eines Elektromagneten, insbesondere über die Regelelektronik (9), betätigen läßt.

7. Schaltregler nach einem der Ansprüche 1 bis 6, **dadurch gekennzeichnet, daß** die Regelelektronik (9) an der konstant geregelten Betriebsspannung (U_{B}), vorzugsweise kombiniert mit dem Meßwertsensor (7), liegt.

8. Schaltregler nach einem der Ansprüche 1 bis 7, **dadurch gekennzeichnet, daß** die Regelelektronik über die Speicherdrossel versorgt wird bzw. an der konstant geregelten Betriebsspannung (U_{B}) liegt.

9. Schaltregler nach einem der Ansprüche 1 bis 8, **dadurch gekennzeichnet, daß** die Regelelektronik (9) und der Meßwertsensor (7) kombiniert, insbesondere integriert in einem Bauelement, sind.

10. Schaltregler nach einem der Ansprüche 1 bis 9, **dadurch gekennzeichnet, daß** die Speicherdrossel (2) zugleich als Magnetspule des Elektromagneten dient.

11. Schaltregler nach einem der Ansprüche 1 bis 10, **dadurch gekennzeichnet, daß** an die Klemmen (11,12) der konstant geregelten Betriebsspannung (U_{B}) die Meßelektronik eines Kondensatableiters gelegt ist und daß als Magnetspule des zum Kondensatableiter gehörenden sowie durch die Meßelektronik gesteuerten Magnetventils die Speicherdrossel (2) dient.

## Claims

1. Switched-mode regulator with storage / smoothing choke (2), momentary-contact switch (3), an electromagnet with a solenoid and an electronic control circuitry (9) which supplies an electromagnet equipped with a solenoid - irrespective of different supply voltages (SV / UV) - with a specified operating voltage (OV / UB) by means of a storage circuitry (1) the storage / smoothing choke (2) of which fed by the supply voltage and whose electronic control circuit (9) which operates the momentary contact switch (3) receives its reference signal from a sensor (7), **characterised in that** the coil of the choke (2) also acts as coil for the electromagnet.

2. Switched-mode regulator according to claim 1, **characterised in that** when the storage / smoothing choke (2) is used as a solenoid at least one additional resistor (13) is supplied via the storage / smoothing choke (2) or is connected to the stabilised operating voltage (OV / UB).

3. Switched-mode regulator according to claim 2, **characterised by** facilities which variably and automatically adapt the additional resistor (13) to the demands of making current and holding current from the solenoid.

4. Switched-mode regulator according to claim 2 or 3, **characterised in that** the additional resistor (13) is preferably also controlled regarding number or size by a device connected to the operating voltage (OV / UB).

5. Switched-mode regulator according to one of claims 2 to 4, **characterised in that** the additional resistor (13) is connected via a switch (14) to the operating voltage (OV / UB).

6. Switched-mode regulator according to claim 5, **characterised in that** the switch (14) can be operated via the electronic control circuitry (9) if the storage /smoothing choke (2) is used as a solenoid of an electromagnet.

7. Switched-mode regulator according to one of claims 1 to 6, **characterised in that** the electronic control circuitry (9) is connected to the stabilised operating voltage (OV / UB) preferably in combination with the sensor (7).

8. Switched-mode regulator according to one of claims 1 to 7, **characterised in that** the electronic control circuitry is supplied via the storage / smoothing choke or connected to the stabilised operating voltage (OV / UB).

9. Switched-mode regulator according to one of claims 1 to 8, **characterised in that** the electronic control circuitry (9) and the sensor (7) are combined, or more specifically, integrated in one component.

10. Switched-mode regulator according to one of claims 1 to 9, **characterised in that** the storage / smoothing choke (2) serves at the same time as a solenoid for the electromagnet.

11. Switched-mode regulator according to one of claims 1 to 10, **characterised in that** terminals (11, 12) of the stabilised operating voltage (OV /UB) are connected to the electronic sensing unit of a condensate drainage system and that the storage / smoothing choke (2) serves as solenoid of the solenoid valve of the condensate drainage system with the solenoid valve being controlled by the electronic sensing unit.

## Revendications

1. Dispositif de régulation comprenant une bobine de réactance (2), un interrupteur à touche (3), un électro-aimant présentant une bobine et un système électronique de régulation (9) pour faire fonctionner cet électro-aimant présentant une bobine avec une tension de fonctionnement prédéterminée (U_{B}) alors même que la tension d'alimentation (U_{V}) varie, ladite tension de fonctionnement étant produite dans un circuit (1) auquel est associé un capteur de valeur mesurée (7) mis en circuit dans un système électronique de régulation (9) associé à l'interrupteur à touche (3), à l'aide d'une bobine de réactance (2) recevant la tension d'alimentation, **caractérisé en ce que** la bobine de réactance (2) sert simultanément de bobine pour l'électro-aimant.

2. Dispositif de régulation selon la revendication 1, **caractérisé en ce que** lorsque la bobine de réactance fait office de bobine pour l'électro-aimant, au moins une résistance supplémentaire (13) est alimentée par le biais de la bobine de réactance (2) ou est mise sous la tension de fonctionnement (U_{B}) réglée de façon à être constante.

3. Dispositif de régulation selon la revendication 2, **caractérisé par** des moyens qui adaptent la résistance supplémentaire (13) de façon variable et automatique aux besoins en courant de démarrage et en courant d'arrêt de l'électro-aimant.

4. Dispositif de régulation selon la revendication 2 ou 3, **caractérisé en ce que** la résistance supplémentaire (13) est commandée, en termes de nombre ou de taille, par un appareil de préférence également mis sous la tension de fonctionnement (U_{B}).

5. Dispositif de régulation selon l'une des revendications 2 à 4, **caractérisé en ce que** la résistance supplémentaire (13) est mise sous la tension de fonctionnement (U_{B}) par le biais d'un interrupteur (14).

6. Dispositif de régulation selon la revendication 5, **caractérisé en ce que** l'interrupteur (14) peut notamment être actionné par le biais du système électronique de régulation (9) lorsque la bobine de réactance (2) est utilisée en tant que bobine d'un électro-aimant.

7. Dispositif de régulation selon l'une des revendications 1 à 6, **caractérisé en ce que** le système électronique de régulation (9) est mis sous la tension de fonctionnement (U_{B}) réglée de façon à être constante de préférence en combinaison avec le capteur de valeur mesurée (7).

8. Dispositif de régulation selon l'une des revendications 1 à 7, **caractérisé en ce que** le système électronique de régulation est alimenté par le biais de la bobine de réactance ou est mis sous la tension de fonctionnement (UB) qui est réglée de façon à être constante.

9. Dispositif de régulation selon l'une des revendications 1 à 8, **caractérisé en ce que** le système électronique de régulation (9) et le capteur de valeur mesurée (7) sont combinés, notamment intégrés, dans un élément de construction.

10. Dispositif de régulation selon l'une des revendications 1 à 9, **caractérisé en ce que** la bobine de réactance (2) sert simultanément de bobine pour l'électro-aimant.

11. Dispositif de régulation selon l'une des revendications 1 à 10, **caractérisé en ce que** le système électronique de mesure d'un purgeur automatique est raccordé aux bornes (11, 12) de la tension de fonctionnement (U_{B}) réglée de façon à être constante, et **en ce que** la bobine de réactance (2) fait office de bobine pour l'électrovanne faisant partie du purgeur automatique et commandée par le système électronique de mesure.
